(19) **Europäisches Patentamt / European Patent Office / Office européen des brevets**

(11) **EP 4 386 780 B1**

(12) # EUROPEAN PATENT SPECIFICATION

(45) Date of publication and mention
of the grant of the patent:
**02.07.2025 Bulletin 2025/27**

(21) Application number: **23205823.0**

(22) Date of filing: **25.10.2023**

(51) International Patent Classification (IPC):
**H01B 3/44** *(2006.01)*

(52) Cooperative Patent Classification (CPC):
(C-Sets available)
**H01B 3/441** (Cont.)

(54) **RESIN COMPOSITION, PELLET, POWER CABLE, AND METHOD FOR MANUFACTURING POWER CABLE**

HARZZUSAMMENSETZUNG, PELLET, STROMKABEL UND VERFAHREN ZUR HERSTELLUNG EINES STROMKABELS

COMPOSITION DE RÉSINE, PASTILLE, CÂBLE D'ALIMENTATION ET PROCÉDÉ DE FABRICATION DE CÂBLE D'ALIMENTATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **02.11.2022 JP 2022176045**

(43) Date of publication of application:
**19.06.2024 Bulletin 2024/25**

(73) Proprietor: **Sumitomo Electric Industries, Ltd.**
**Osaka-shi, Osaka 541-0041 (JP)**

(72) Inventors:
• **Hosomizu, Kohei**
  **Osaka-shi, Osaka 5410041 (JP)**
• **Yamana, Takeshi**
  **Osaka-shi, Osaka 5410041 (JP)**
• **Izumi, Naoki**
  **Osaka-shi, Osaka 5410041 (JP)**
• **Yamazaki, Takanori**
  **Osaka-shi, Osaka 5410041 (JP)**
• **Yamasaki, Satoshi**
  **Osaka-shi, Osaka 5410041 (JP)**

(74) Representative: **Grünecker Patent- und Rechtsanwälte**
**PartG mbB**
**Leopoldstraße 4**
**80802 München (DE)**

(56) References cited:
**JP-A- H11 286 522**

• **MATTIAS G. ANDERSSON: "Highly Insulating Polyethylene Blends for High-Voltage Direct-Current Power Cables", ACS MACRO LETTERS, vol. 6, no. 2, 11 January 2017 (2017-01-11), pages 78 - 82, XP093156645, ISSN: 2161-1653, Retrieved from the Internet <URL:https://pubs.acs.org/doi/full/10.1021/acsmacrolett.6b00941> [retrieved on 20240429], DOI: 10.1021/acsmacrolett.6b00941**
• **MATTIAS G ANDERSSON: "Highly insulating polyethylene blends for HVDC power cables - Supporting Information", ACS MACRO LETTERS, 11 January 2017 (2017-01-11), pages 1 - 6, XP093157150, Retrieved from the Internet <URL:https://pubs.acs.org/doi/suppl/10.1021/acsmacrolett.6b00941/suppl_file/mz6b00941_si_001.pdf> [retrieved on 20240429], DOI: 10.1021/acsmacrolett.6b00941.**
• **SU JINGANG ET AL: "Electrical tree degradation in high-voltage cable insulation: progress and challenges", HIGH VOLTAGE, THE INSTITUTION OF ENGINEERING AND TECHNOLOGY, MICHAEL FARADAY HOUSE, SIX HILLS WAY, STEVENAGE, HERTS. SG1 2AY, UK, vol. 5, no. 4, 1 August 2020 (2020-08-01), pages 353 - 364, XP006092067, DOI: 10.1049/HVE.2020.0009**

EP 4 386 780 B1

- **JIANG LIUHAO ET AL: "The Influence of Short Chain Branch on the Crystal Characteristics and Breakdown Strength of Low-Density Polyethylene", IEEE TRANSACTIONS ON DIELECTRICS AND ELECTRICAL INSULATION, IEEE SERVICE CENTER, PISCATAWAY, NJ, US, vol. 28, no. 4, 17 August 2021 (2021-08-17), pages 1181 - 1188, XP011872581, ISSN: 1070-9878, [retrieved on 20210817], DOI: 10.1109/ TDEI.2021.009529**

(52) Cooperative Patent Classification (CPC): (Cont.)

C-Sets
C08K 3/013, C08L 23/04

**Description**

[Technical Field]

The present disclosure relates to a resin composition, a pellet, a power cable, and a method for manufacturing a power cable.

[Background Art]

Polyethylene has been used as a base resin for forming an insulation layer of a power cable, for example (see Patent Literature 1, Patent Literature 2, Non-Patent Literature 1 and Non-Patent Literature 2 for example).

[Citation List]

[Patent Literature]

PTL. 1: International Patent Application Publication No. 2019/202870
Non-Patent Literature 1: Mattias G. Andersson: "Highly Insulating Polyethylene Blends for High-Voltage Direct-Current Power Cables", ACS Macro Letters, vol. 6, no. 2, 11 January 2017, pages 78-82
Patent Literature 2: JP H11 286522 A
Non-Patent Literature 2: Jiang Liuhao et al.: "The Influence of Short Chain Branch on the Crystal Characteristics and Breakdown Strength of Low-Density Polyethylene", IEEE Transactions on Dielectrics and Electrical Insulation, vol. 28, no. 4, 17 August 2021, pages 1181-1188

[Summary of Invention]

An object of the present disclosure is to improve insulating properties of an insulation layer.
According to the present disclosure, it is possible to improve insulating properties of an insulation layer.
[1] A resin composition according to an aspect of the present disclosure is a resin composition for forming an insulation layer of a power cable, the resin composition including:

polyethylene,
wherein the polyethylene includes methine groups, and
the polyethylene satisfies the following formula (1) in a $^{13}$C nuclear magnetic resonance spectrum,

$$RX \leq 5 \cdots (1)$$

where RX satisfies RX =X/(X+Y+Z)} $\times$ 100, and
X, Y, and Z respectively represent an integrated intensity of the methine groups, an integrated intensity of methylene groups, and an integrated intensity of methyl groups in the $^{13}$C nuclear magnetic resonance spectrum of the polyethylene.
With this configuration, it is possible to suppress local occurrence of electrical treeing.

[2] In the resin composition described above in [1],

a DC breakdown electric field strength measured using a needle electrode having a tip end with a radius of curvature of 10 $\mu$m is 100 kV/mm or more.
With this configuration, it is possible to suppress dielectric breakdown that occurs in the insulation layer due to local occurrence of electrical treeing in practical use.

[3] In the resin composition described above in [1] or [2],

the polyethylene satisfies the following formula (2),

$$0.05 \leq RX \cdots (2).$$

With this configuration, it is possible to stably suppress local occurrence of electrical treeing.

[4] In the resin composition described above in [3],

a DC breakdown electric field strength measured using a needle electrode having a tip end with a radius of curvature of 5 $\mu$m is 100 kV/mm or more.
With this configuration, it is possible to stably suppress dielectric breakdown that occurs in the insulation layer due to local occurrence of electrical treeing in practical use.

[5] In the resin composition described above in [3] or [4],

the polyethylene satisfies the following formula (2)',

$$0.1 \leq RX \cdots (2)'.$$

With this configuration, it is possible to stably suppress local occurrence of electrical treeing.

[6] In the resin composition described above in any one of [1] to [5],

the polyethylene satisfies the following formula (3),

$$0.8 \leq (X/Z) \leq 1.2 \cdots (3).$$

With this configuration, it is possible to stably suppress local occurrence of electrical treeing.

[7] In the resin composition described above in [6],

a DC breakdown electric field strength measured using a needle electrode having a tip end with a radius of curvature of 3 $\mu$m is 100 kV/mm or more.
With this configuration, it is possible to stably suppress dielectric breakdown that occurs in the insulation layer due to local occurrence of electrical treeing in practical use.

[8] The resin composition described above in any one of [1] to [7], further including an inorganic filler.
With this configuration, it is possible to suppress the accumulation of space charge under a DC electric field.
[9] In the resin composition described above in any one of [1] to [8],

the polyethylene includes at least low density polyethylene.
With this configuration, it is possible to stably obtain a resin composition that suppresses local occurrence of electrical treeing.

[10] A pellet according to an aspect of the present disclosure includes the resin composition described above in any one of [1] to [9].
With this configuration, it is possible to suppress local occurrence of electrical treeing.
[11] A power cable according to an aspect of the present disclosure includes:

a conductor; and
an insulation layer covering an outer circumferential surface of the conductor,
wherein the insulation layer includes the resin composition described above in any one of [1] to [9].
With this configuration, it is possible to suppress local occurrence of electrical treeing.

[12] A method for manufacturing a power cable according to an aspect of the present disclosure includes:

preparing a conductor; and
forming an insulation layer so as to cover an outer circumferential surface of the conductor,
wherein when forming the insulation layer, the insulation layer is formed using the resin composition described above in any one of [1] to [9].

With this configuration, it is possible to suppress local occurrence of electrical treeing.

[Brief Description of Drawings]

[FIG. 1]

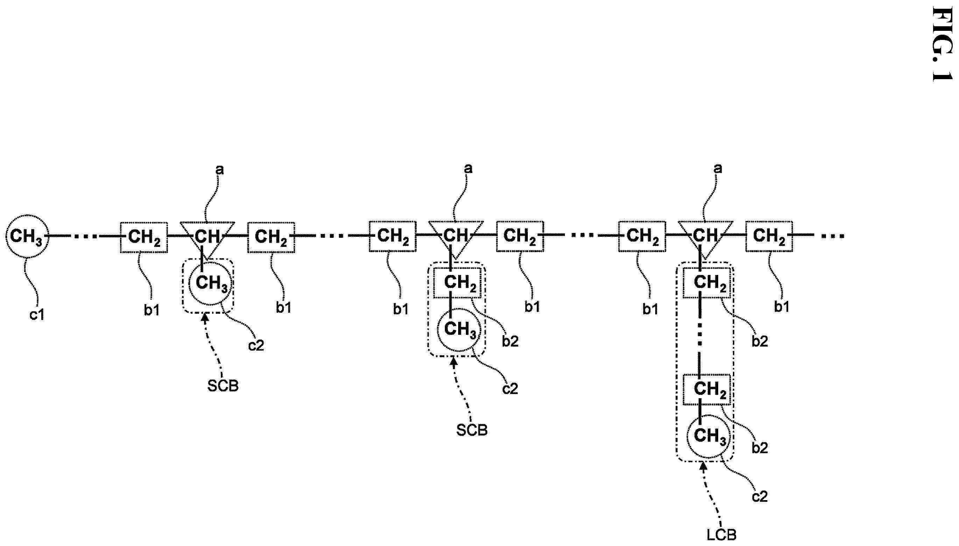

FIG. 1 is a schematic diagram showing a structure of a part of polyethylene contained as an example in a resin composition according to an embodiment of the present disclosure.
[FIG. 2]

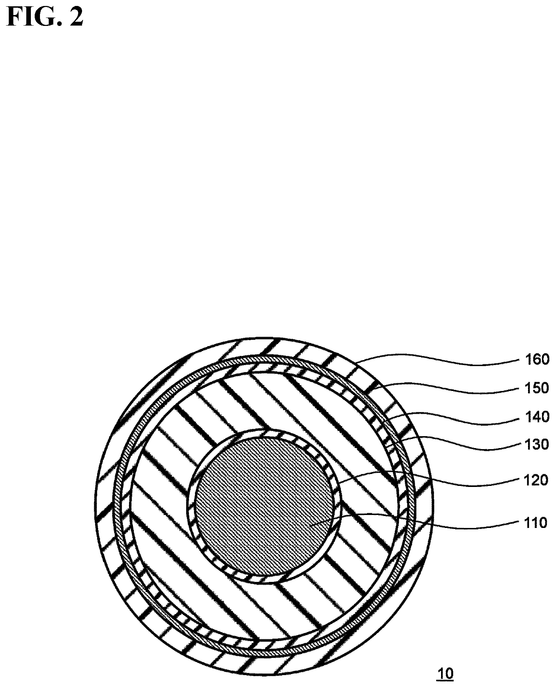

FIG. 2 is a schematic cross-sectional view of a power cable according to an embodiment of the present disclosure, which is taken along a plane perpendicular to an axial direction of the power cable.
[FIG. 3]

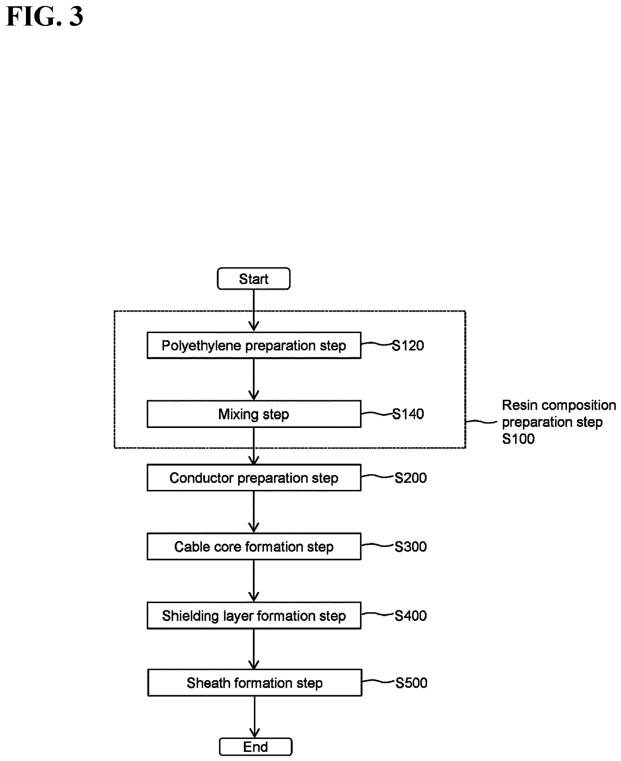

FIG. 3 is a flowchart showing a method for manufacturing a power cable according to an embodiment of the present disclosure.
[FIG. 4]

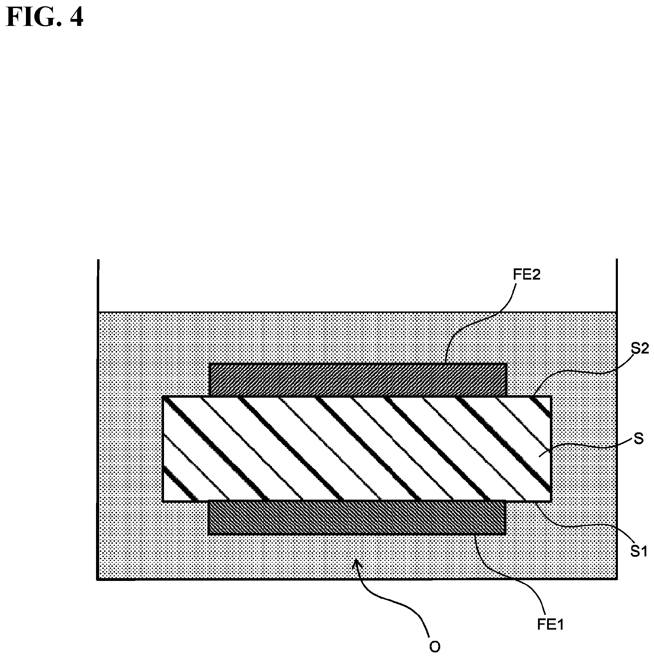

FIG. 4 is a schematic cross-sectional view showing Evaluation 1.
[FIG. 5A]

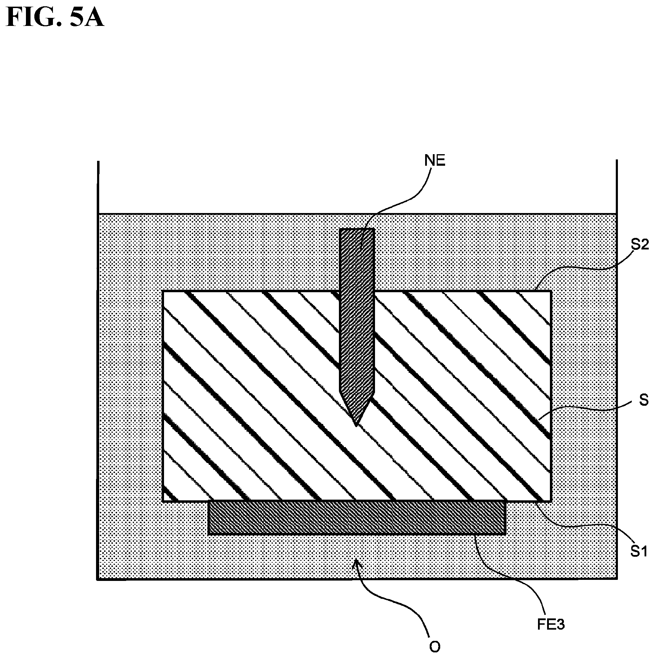

FIG. 5A is a schematic cross-sectional view showing Evaluation 2.
[FIG. 5B]

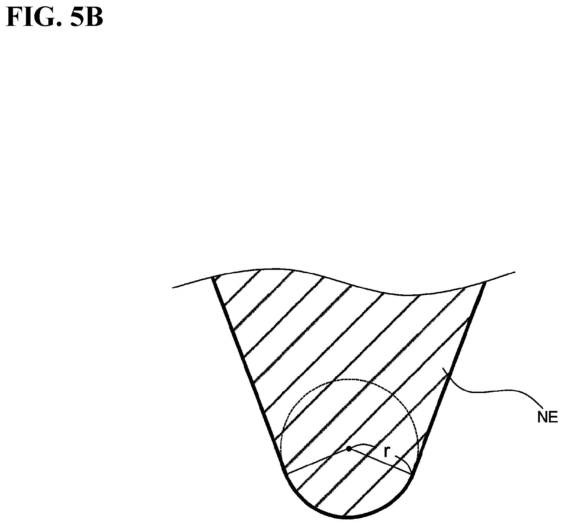

FIG. 5B is an enlarged schematic cross-sectional view of a tip end of a needle electrode used in Evaluation 2.
[FIG. 6]

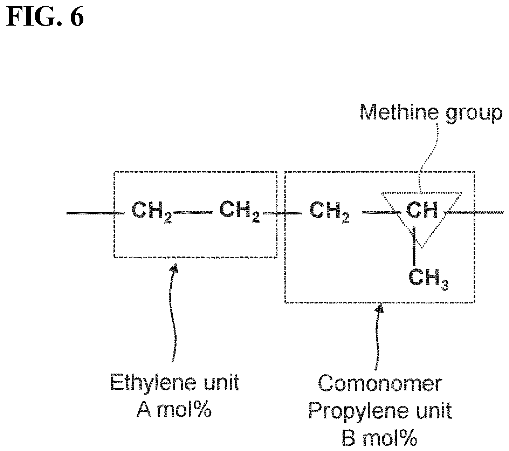

FIG. 6 is a schematic diagram showing a structure of the copolymer in reference 1.
[FIG.7]

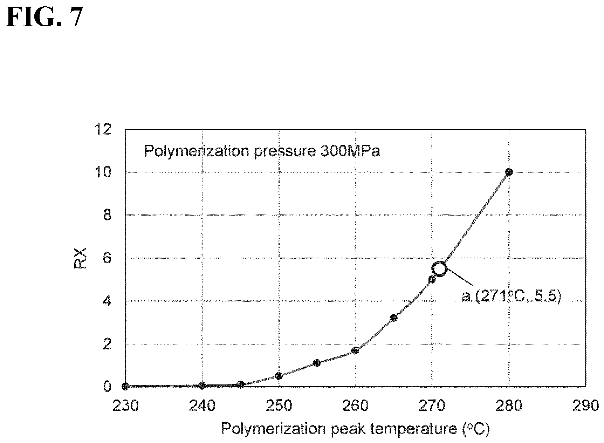

FIG. 7 is a diagram showing the proportion RX of methine groups to the polymerization peak temperature.
[FIG.8]

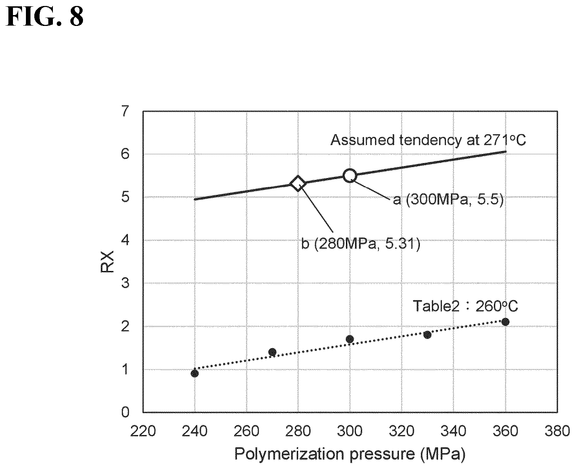

FIG. 8 is a diagram showing the proportion RX of methine groups to the polymerization pressure.

[Description of Embodiments]

[Description of the Embodiment of the Disclosure]

Insulating properties of an insulation layer of a power cable are evaluated based on DC breakdown electric field strength as described in JP 2019-189842A or US 2021/032434A, for example. Hitherto, flat electrodes (flat plate electrodes) have been used in the evaluation.
However, it was found that insulating properties of an insulation layer of a power cable may deteriorate at an electric field strength that is lower than the DC breakdown electric field strength. When insulating properties deteriorate, electrical treeing locally occurs in a portion of the insulation layer of the power cable. The electrical treeing is caused by foreign matter. The foreign matter is minute metal foreign matter or a minute void, for example.
The inventor(s) found that it is possible to observe the occurrence of electrical treeing described above by measuring the DC breakdown electric field strength of the insulation layer using a needle electrode. That is, it is possible to reproduce local occurrence of electrical treeing by creating a simulative situation using a needle electrode that has a sharp tip end.
As a result of the reproduction, it was found that a specific functional group (hydrocarbon group) in polyethylene affects insulating properties of the insulation layer. The inventor(s) found that polyethylene that includes the functional group at a specific proportion can suppress local occurrence of electrical treeing.

[Details of the Embodiment of the Disclosure]

Next, an embodiment of the present disclosure will be described below with reference to the drawings. The present disclosure is not limited to these illustrations, but is intended to be indicated by the claims and encompass all the changes which fall within the meaning and scope equivalent to the claims.

<One Embodiment of the Disclosure>

(1) Resin composition

A resin composition according to the present embodiment is a material that constitutes an insulation layer 130 of a power cable 10, which will be described later. The resin composition contains at least a base resin, for example.

(Base resin)

The base resin (base polymer) is a resin component that constitutes a main component of the resin composition. The base resin in the present embodiment includes polyethylene, for example.

In the resin composition according to the present embodiment, the polyethylene includes methine groups, methylene groups, and methyl groups, for example.

A "methine group" is a functional group represented by -CH. The methine group includes one carbon atom and one hydrogen atom bound to the carbon atom. In addition to the hydrogen atom, at least another carbon atom is bound to the carbon atom included in the methine group.

Specifically, as shown in FIG. 1, for example, methine groups $a$ constitute a portion of a main chain of the polyethylene. Branches are bound to carbon atoms included in the methine groups $a$. Examples of the branches include the following.

- Short chain branches (SCB) such as a methyl branch
- Long chain branches (LCB)

Note that carbon atoms included in the methine groups a to which branches are bound are tertiary carbon atoms. Since the polyethylene includes the above-described branches, the density and crystallinity of the polyethylene can be adjusted.

Note that in the polyethylene according to the present embodiment, methine groups are bound to branches at many positions. However, there may be a position at which a methine group is not bound to a branch but constitutes a portion of a vinyl group or the like.

A "methylene group" is a functional group represented by $-CH_2$. The methylene group includes one carbon atom and two hydrogen atoms bound to the carbon atom.

Specifically, as shown in FIG. 1, for example, methylene groups b1 constitute a portion of the main chain of the polyethylene. Carbon atoms that are included in branches are not bound to the carbon atoms included in the methylene groups b1. However, a methylene group b2 itself may constitute a portion of a branch including two or more carbon atoms.

A "methyl group" is a functional group represented by $-CH_3$. The methyl group includes one carbon atom and three hydrogen atoms bound to the carbon atom.

Specifically, as shown in FIG. 1, for example, the polyethylene includes a methyl group c1 at a terminal end of the main chain or a methyl group c2 at a terminal end of a branch.

Methine groups, methylene groups, and methyl groups included in the polyethylene can be analyzed using $^{13}C$ nuclear magnetic resonance (NMR, hereinafter abbreviated as "$^{13}C$-NMR"), for example. In a $^{13}C$-NMR spectrum of the polyethylene, multiple peaks attributed to methine groups, methylene groups, and methyl groups are detected according to their positions in the polyethylene.

The resin composition in the present embodiment has the following characteristics in the $^{13}C$-NMR spectrum of the polyethylene, for example.

The polyethylene contained in the resin composition according to the present embodiment satisfies the following formula (1) regarding peaks attributed to methine groups in the $^{13}C$-NMR spectrum.

$$RX \leq 5 \cdots (1)$$

Here, RX satisfies the following formula.

$$RX = \{X/(X+Y+Z)\} \times 100$$

Hereinafter, RX will be also referred to as "proportion of methine groups".

X, Y, and Z respectively represent the following values in the $^{13}C$-NMR spectrum of the polyethylene.

- X: Integrated intensity of methine groups

The integrated intensity of methine groups is a sum obtained by integrating intensities of peaks attributed to methine groups, which appear according to positions of methine groups in the polyethylene.

· Y: Integrated intensity of methylene groups

The integrated intensity of methylene groups is a sum obtained by integrating intensities of peaks attributed to methylene groups, which appear according to positions of methylene groups in the polyethylene.

· Z: Integrated intensity of methyl groups

The integrated intensity of methyl groups is a sum obtained by integrating intensities of peaks attributed to methyl groups, which appear according to positions of methyl groups in the polyethylene.

When the proportion RX of methine groups is more than 5, the polyethylene easily decomposes. This is because the bond energy of a tertiary carbon atom included in a methine group is smaller than the bond energy of a methylene group or the bond energy of a methyl group. Accordingly, a methine group more easily decomposes when subjected to a high electric field, compared with a methylene group or a methyl group. Also, when the proportion RX of methine groups is more than 5, the polyethylene includes many branches bound to the methine groups. The amount of amorphous portions of the polyethylene increases in proportion to the number of branches included in the polyethylene. Amorphous portions of the polyethylene easily transmit an electric current.

The proportion RX of methine groups in the polyethylene according to the present embodiment is 5 or less. Polyethylene having a proportion RX of 5 or less includes fewer methine groups than polyethylene having a proportion RX more than 5. Therefore, even when a high electric field is locally applied to the polyethylene according to the present embodiment, decomposition of tertiary carbon atoms included in methine groups is less likely to occur. Also, polyethylene having a proportion RX of 5 or less includes fewer branches bound to methine groups than polyethylene having a proportion RX more than 5. Accordingly, the polyethylene includes few amorphous portions generated due to the branches. Therefore, transmission of an electric current in the amorphous portions can be suppressed.

The polyethylene contained in the resin composition according to the present embodiment satisfies the following formula (2) regarding peaks attributed to methine groups in the $^{13}$C-NMR spectrum.

$$0.05 \leq RX \cdots (2)$$

A crystal of polyethylene having a proportion RX less than 0.05 is larger than a crystal of polyethylene having a proportion RX of 0.05 or more. When crystals of polyethylene are large, a sink mark (a shrink mark, or a sunk spot) is likely to form between the crystals. The terms "sink mark" used here mean at least either a depression or a void formed through contraction of resin. Electrical treeing may start from such a sink mark when a high electric field is applied.

In the present embodiment, the proportion RX is 0.05 or more, and therefore, formation of a sink mark between crystals can be suppressed.

The polyethylene contained in the resin composition according to the present embodiment may satisfy the following formula (2)' regarding peaks attributed to methine groups in the $^{13}$C-NMR spectrum.

$$0.1 \leq RX \cdots (2)'$$

In this case, it is possible to stably suppress formation of a sink mark between crystals.

Furthermore, in the resin composition according to the present embodiment, the content of methine groups and the content of methyl groups in the polyethylene satisfy the following formula (3).

$$0.8 \leq (X/Z) \leq 1.2 \cdots (3)$$

Hereinafter, X/Z will also be referred to as a "ratio of methine groups to methyl groups".

When compared with polyethylene having a ratio X/Z of 0.8 or more, in polyethylene having a ratio X/Z less than 0.8, the content of methine groups is smaller than the content of methyl groups. In this case, the polyethylene includes a portion in which two branches are generated from one quaternary carbon atom, for example. The quaternary carbon atom has a smaller bond energy than a tertiary carbon atom included in a methine group. Therefore, decomposition of the quaternary carbon atom is likely to occur when a high electric field is locally applied.

When compared with polyethylene having a ratio X/Z of 1.2 or less, in polyethylene having a ratio X/Z more than 1.2, the content of methine groups is larger than the content of methyl groups. In this case, the polyethylene includes many methine groups that constitute vinyl groups, for example. Methine groups constituting vinyl groups do not have branches, and accordingly, the number of branches is small. Therefore, a minute sink mark may form between crystals.

In the present embodiment, the ratio X/Z is 0.8 or more. Therefore, it is possible to suppress generation of a portion in which two branches are generated from a quaternary carbon atom. Accordingly, it is possible to suppress decomposition that occurs due to the presence of a quaternary carbon atom even when a high electric field is locally applied.

In the present embodiment, the ratio X/Z is 1.2 or less. In this case, the polyethylene includes a predetermined number of branches. Therefore, it is possible to suppress formation of a minute sink mark between crystals.

The polyethylene in the present embodiment described above includes at least low density polyethylene (LDPE), for example. The density of LDPE is 0.91 g/cm$^3$ or more and less than 0.93 g/cm$^3$. The polyethylene in the present embodiment includes LDPE as a main component, for example. The term "main component" used here means a component whose content is the largest.

The polyethylene in the present embodiment may also include a polyethylene other than LDPE. Examples of the polyethylene other than LDPE include linear low density polyethylene (LLDPE), medium density polyethylene (MDPE), and high density polyethylene (HDPE).

Also, the base resin may further include a modified polyolefin obtained by grafting a polar group to a polyolefin, or a copolymer of an olefin and a polar monomer, for example. These are disclosed in WO 2019/202870 or US 2021/032434A.

Two or more materials may also be used in combination out of the examples of polyethylene other than LDPE, the modified polyolefin obtained by grafting a polar group to a polyolefin, and the copolymer of an olefin and a polar monomer.

(Other additives)

The resin composition may further contain at least any of an inorganic filler, a crosslinking agent, an antioxidant, and a lubricant as other additives. The inorganic filler, the crosslinking agent, the antioxidant, and the lubricant are disclosed in JP 2020-132819A, US 2020/279672A, JP 2020-132818A, US 2020/273598A, JP 2020-132817A, US 2020/270426A, JP 2019-189842A, and US 2021/032434A, for example, and therefore descriptions thereof are omitted.

The resin composition according to the present embodiment containing the materials described above is loaded as pellets into an extruder when the insulation layer 130 of the power cable 10 is to be extrusion-molded.

(2) Properties of resin composition

The resin composition according to the present embodiment has the following properties.

In the present embodiment, a sheet made of the resin composition has a volume resistivity of $1 \times 10^{15}$ $\Omega \cdot$cm or more, for example. A method for measuring the volume resistivity is disclosed in JP 2020-132819A or US 2020/279672A, for example, and therefore a description thereof is omitted.

In the present embodiment, the sheet made of the resin composition has a dielectric breakdown electric field strength of 250 kV/mm or more, for example, and the dielectric breakdown electric field strength may be 300 kV/mm or more. A method for measuring the dielectric breakdown electric field strength is disclosed in JP 2019-189842A or US 2021/032434A, for example, and therefore a description thereof is omitted.

Furthermore, the resin composition according to the present embodiment has the following properties due to satisfying the above-described requirements for the $^{13}$C-NMR spectrum of polyethylene.

In the present embodiment, local occurrence of electrical treeing can be suppressed due to the polyethylene contained in the resin composition satisfying the formula (1): RX≤5. Accordingly, a DC breakdown electric field strength of 100 kV/mm or more can be obtained when measured using a needle electrode having a tip end with a radius of curvature of 10 $\mu$m.

In the present embodiment, local occurrence of electrical treeing can be suppressed due to the polyethylene contained in the resin composition satisfying the formula (2): 0.05≤RX. Accordingly, a DC breakdown electric field strength of 100 kV/mm or more can be obtained when measured using a needle electrode having a tip end with a radius of curvature of 5 $\mu$m.

In the present embodiment, local occurrence of electrical treeing can be suppressed due to the polyethylene contained in the resin composition satisfying the formula (3): 0.8≤(X/Z)≤1.2. Accordingly, a DC breakdown electric field strength of 100 kV/mm or more can be obtained when measured using a needle electrode having a tip end with a radius of curvature of 3 $\mu$m.

In the present embodiment, the accumulation of space charge in the resin composition can be suppressed due to the resin composition further containing an inorganic filler. A method for measuring a field enhancement factor (FEF) is disclosed in WO 2017/026039 or US 2018/218804, for example, and therefore a description thereof is omitted.

(3) Power cable

Next, the power cable according to the present embodiment will be described with reference to FIG. 2.

The power cable 10 according to the present embodiment includes a conductor 110, an internal semiconductive layer 120, an insulation layer 130, an external semiconductive layer 140, a shielding layer 150, and a sheath 160. The conductor 110, the internal semiconductive layer 120, the insulation layer 130, the external semiconductive layer 140, the shielding layer 150, the sheath 160, and dimensions are disclosed in WO 2019/202870 or US 2021/032434, and therefore descriptions thereof are omitted.

The insulation layer 130 is formed through extrusion molding using the resin composition of the present embodiment described above. Note that a sheet cut out from the extrusion-molded insulation layer 130 has the above-described properties of the resin composition according to the present embodiment.

(4) Method for manufacturing power cable

Next, a method for manufacturing the power cable 10 according to the present embodiment will be described with reference to FIG. 3.

The method for manufacturing the power cable 10 according to the present embodiment includes a resin composition preparation step S100, a conductor preparation step S200, a cable core formation step S300, a shielding layer formation step S400, and a sheath formation step S500, for example. The conductor preparation step S200, the cable core formation step S300, the shielding layer formation step S400, and the sheath formation step S500 are disclosed in JP 2020-132819A or US 2020/279672A, for example, and therefore descriptions thereof are omitted. The following describes the resin composition preparation step S100.

(S100: Resin composition preparation step)

First, the resin composition according to the present embodiment is prepared. The resin composition preparation step S100 includes a polyethylene preparation step S120 and a mixing step S140, for example.

(S120: Polyethylene preparation step)

In the present embodiment, polyethylene is produced by polymerizing a monomer using a high pressure method, for example. The monomer is ethylene, for example.

In the present embodiment, a polymerization peak temperature during polymerization of ethylene is mainly controlled, for example. As a result, polyethylene that satisfies the formulas (1), (2), and (3) in the $^{13}$C-NMR spectrum described above is obtained.

Specifically, short chain branches (SCB) are generated through an intramolecular chain transfer reaction of polymer radicals during high-pressure radical polymerization. Furthermore, long chain branches (LCB) are generated as a result of chain transfer occurring between generated polymer molecules and polymer radicals. The above-described methine groups are formed at binding sites between the thus generated branches and the main chain.

For example, the polymerization peak temperature in a reaction tube of a polymerization apparatus is controlled to control the proportion of methine groups in the polyethylene. The higher the polymerization peak temperature is, the more likely thermal noise is to occur. It is possible to thus facilitate the generation of branches. That is, the proportion of methine groups in the polyethylene can be increased.

The proportion of methine groups in the polyethylene may also be controlled by controlling the position at which the temperature reaches the polymerization peak temperature in the reaction tube of the polymerization apparatus, for example. The temperature reaches the polymerization peak temperature at a predetermined position in the cooling section because the flow in the reaction tube of the polymerization apparatus is an extrusion flow. The polymerization peak temperature and the position at which the temperature reaches the polymerization peak temperature depend on operating conditions. At this time, a polymer may be deposited on a tube wall depending on the temperature distribution in the reaction tube. It is possible to facilitate the generation of branches by increasing the amount of the polymer deposited on the tube wall. That is, the proportion of methine groups in the polyethylene can be increased.

Furthermore, a polymerization pressure in the reaction tube of the polymerization apparatus may also be controlled. The higher the polymerization pressure is, the more the generation of branches can be facilitated. That is, the proportion of methine groups in the polyethylene can be increased.

Note that it is possible to reduce the proportion of methine groups in the polyethylene by performing control in a manner opposite to that described above.

(S140: Mixing step)

The mixing step is performed subsequently to the polyethylene preparation step. A base resin including the polyethylene and additives are mixed, and pellets of the mixed material are formed.

(S200: Conductor preparation step)

On the other hand, the conductor 110 formed by twisting together a plurality of conductor core wires is prepared.

(S300: Cable core formation step (extrusion step))

Next, a cable core is formed by applying the internal semiconductive layer 120, the insulation layer 130, and the external semiconductive layer 140 to the outer circumferential surface of the conductor 110. Note that the internal semiconductive layer 120, the insulation layer 130, and the external semiconductive layer 140 are crosslinked.

(S400: Shielding layer formation step)

Next, the shielding layer 150 constituted by a copper tape, for example, is formed on the outer surface of the external semiconductive layer 140.

(S500: Sheath formation step)

The sheath 160 is formed on the outer circumferential surface of the shielding layer 150.
The power cable 10 is manufactured through the above steps.

(5) Summary of the present embodiment

One or more of the following effects can be achieved according to the present embodiment.
(a) The polyethylene contained in the resin composition according to the present embodiment satisfies the formula (1): $RX \leq 5$. Therefore, it is possible to suppress local occurrence of electrical treeing.
(b) In the present embodiment, the proportion RX is 5 or less, and accordingly, it is possible to obtain a DC breakdown electric field strength of 100 kV/mm or more. Note that the DC breakdown electric field strength was measured using a needle electrode having a tip end with a radius of curvature of 10 $\mu$m. In this case, it is possible to suppress local occurrence of electrical treeing. Consequently, dielectric breakdown of the insulation layer 130 can be suppressed.
(c) The polyethylene contained in the resin composition according to the present embodiment satisfies the formula (2): $0.05 \leq RX$. Therefore, it is possible to stably suppress local occurrence of electrical treeing.
(d) In the present embodiment, the proportion RX is 0.05 or more, and accordingly, it is possible to obtain a DC breakdown electric field strength of 100 kV/mm or more. Note that the DC breakdown electric field strength was measured using a needle electrode having a tip end with a radius of curvature of 5 $\mu$m. In this case, it is possible to stably suppress local occurrence of electrical treeing. Consequently, it is possible to stably suppress dielectric breakdown of the insulation layer 130.
(e) The polyethylene contained in the resin composition according to the present embodiment satisfies the formula (3): $0.8 \leq (X/Z) \leq 1.2$. Therefore, it is possible to suppress decomposition that occurs due to the presence of a quaternary carbon atom even when a high electric field is locally applied. Also, it is possible to suppress formation of a minute sink mark between crystals. As a consequent of these, it is possible to stably suppress local occurrence of electrical treeing.
(f) In the present embodiment, the polyethylene contained in the resin composition satisfies the formula (3): $0.8 \leq (X/Z) \leq 1.2$, and accordingly, it is possible to obtain a DC breakdown electric field strength of 100 kV/mm or more. Note that the DC breakdown electric field strength was measured using a needle electrode having a tip end with a radius of curvature of 3 $\mu$m. In this case, it is possible to more stably suppress dielectric breakdown of the insulation layer 130.

<Other Embodiments of the Present Disclosure>

Although an embodiment of the present disclosure has been described specifically, the present disclosure is not limited to the above embodiment.

In the above embodiment, a case is described in which the resin composition contains an inorganic filler, but a configuration is also possible in which the resin composition does not contain an inorganic filler.

In the above embodiment, a case is described in which the polyethylene contained in the resin composition satisfies the formulas (1), (2), and (3). However, it is sufficient that the polyethylene contained in the resin composition satisfies at least the formula (1). That is, a configuration is also possible in which the $^{13}$C-NMR spectrum of the polyethylene does not satisfy at least either the formula (2) or (3). In this case as well, it is possible to obtain the effect of suppressing electrical treeing due to the formula (1) being satisfied. However, the effect of suppressing electrical treeing can be obtained more stably in a case where the polyethylene further satisfies the formula (2) or (3).

[Examples]

Next, examples according to the present disclosure will be described. These examples are illustrations of the present disclosure.

<Experiment 1>

(1-1) Preparation of polyethylene

Polyethylenes contained in resin compositions of samples 1-1 to 1-9 were produced under the following conditions.

· Polymerization apparatus: Tubular reactor
· Monomer: Ethylene
· Catalyst: Organic peroxide
· Chain transfer agent: Not used.
· Polymerization peak temperature: See Table 1.
· Polymerization pressure: See Table 1.

(1-2) Evaluation

The following evaluation was performed on each of the resin compositions of samples 1-1 to 1-9.

($^{13}$C-NMR)

The resin composition of each sample described above was dissolved in ortho chlorobenzene, and $^{13}$C-NMR analysis was performed in an environment at a temperature of 130°C using an NMR apparatus manufactured by JEOL Ltd. The proportion RX was determined regarding peaks attributed to methine groups in the obtained $^{13}$C-NMR spectrum.
Here, RX satisfies $RX=\{X/(X+Y+Z)\}\times 100$, as described above.

(Evaluation 1: DC breakdown electric field strength measured using flat electrode)

As shown in FIG. 4, a DC breakdown electric field strength was measured using flat electrodes as described below.

· A sheet S with a thickness of 0.15 mm was formed. Note that the sheet S was formed using the resin composition of each sample.
· A flat electrode FE1 was placed on a first surface S1 of the sheet S. Also, a flat electrode FE2 was placed on a second surface S2 of the sheet S. Note that the second surface S2 is opposite to the first surface S1. The flat electrode FE1 and the flat electrode FE2 had a circular shape with a diameter of 25 mm.
· The sheet S was immersed in silicone oil O. The temperature of the silicone oil O was 90°C.
· Voltage was applied to the sheet S using the flat electrode FE1 and the flat electrode FE2. The voltage was increased at a rate of 4 kV/min.
· The DC breakdown electric field strength of the sheet S was calculated based on an applied voltage at the time when dielectric breakdown occurred in the sheet S and the thickness of the sheet S.

(Evaluation 2: DC breakdown electric field strength measured using needle electrode A)

As shown in FIGS. 5A and 5B, a DC breakdown electric field strength was measured using a needle electrode A as described below.

· A sheet S with a thickness of 4 mm was formed. Note that the sheet S was formed using the resin composition of each sample.
· An electrically conductive coating material, which was a silver paste, was applied to a first surface S1 of the sheet S to form an electrode FE3. The electrode FE3 was formed in a circular shape with a diameter of 25 mm.
· A tip end of the needle electrode A (NE) was stuck from a second surface S2 of the sheet S along the thickness direction of the sheet S. The tip end of the needle electrode A (NE) had a radius of curvature $r$ of 10 μm. The tip end of the needle electrode A (NE) was spaced apart from the electrode FE3 by 1 mm.

· The sheet S into which the needle electrode A (NE) was stuck was immersed in silicone oil O. The temperature of the silicone oil O was 90°C.
· Voltage was applied between the needle electrode A (NE) and the electrode FE3. The voltage was increased at a rate of 4 kV/min.
· The DC breakdown electric field strength of the sheet S was calculated based on an applied voltage at the time when dielectric breakdown occurred in the sheet S and the distance between the needle electrode A (NE) and the electrode FE3.

(Evaluation 3: DC breakdown electric field strength measured using needle electrode B)

A DC breakdown electric field strength was measured using a needle electrode B as described below. The radius of curvature of a tip end of the needle electrode B was 5 μm. Measurement conditions other than the radius of curvature of the tip end of the needle electrode B were the same as the measurement conditions under which the DC breakdown electric field strength was measured using the needle electrode A.

(1-3) Results

Table 1 below shows production conditions and evaluation results of the resin compositions of samples 1-1 to 1-9.

[Table 1]

| Sample | | 1-1 | 1-2 | 1-3 | 1-4 | 1-5 | 1-6 | 1-7 | 1-8 | 1-9 |
|---|---|---|---|---|---|---|---|---|---|---|
| Production conditions of polyethylene | Polymerization peak temperature (degree C) | 230 | 240 | 245 | 250 | 255 | 260 | 265 | 270 | 280 |
| | Polymerization pressure (MPa) | 300 | 300 | 300 | 300 | 300 | 300 | 300 | 300 | 300 |
| Properties of polyethylene | RX | 0.01 | 0.05 | 0.1 | 0.5 | 1.1 | 1.7 | 3.2 | 5 | 10 |
| Evaluation | Evaluation 1 (kV/mm) | 301 | 312 | 320 | 325 | 331 | 335 | 330 | 321 | 310 |
| | Evaluation 2 (kV/mm) | 112 | 120 | 123 | 138 | 141 | 152 | 139 | 131 | 92 |
| | Evaluation 3 (kV/mm) | 72 | 105 | 120 | 125 | 135 | 126 | 128 | 125 | 82 |
| Evaluation 1: DC breakdown electric field strength measured using flat electrodes Evaluation 2: DC breakdown electric field strength measured using needle electrode A Evaluation 3: DC breakdown electric field strength measured using needle electrode B | | | | | | | | | | |

Note that the ratio X/Z was 0.8 or more and 1.2 or less in samples 1-1 to 1-9.

(Samples 1-2 to 1-8)

The proportion RX was 0.05 or more and 5 or less in samples 1-2 to 1-8. Evaluation results of these samples in evaluation 1 were 250 kV/mm or more. Evaluation results of these samples in evaluation 2 and evaluation 3 were 100 kV/mm or more.
The proportion RX was 5 or less in these samples. Accordingly, the number of tertiary carbon atoms included in methine groups was small. Therefore, decomposition of tertiary carbon atoms included in methine groups was suppressed even when a high electric field was locally applied. Moreover, the number of branches bound to methine groups was small.

Accordingly, the polyethylene included few amorphous portions generated due to the branches. Since the polyethylene included few amorphous portions, transmission of an electric current in the amorphous portions was suppressed. For the above reasons, local occurrence of electrical treeing was suppressed. It was confirmed that, consequently, the DC breakdown electric field strength measured using the needle electrode A having the tip end with a radius of curvature of 10 $\mu$m was high in samples 1-2 to 1-8.

The proportion RX was 0.05 or more in these samples. Therefore, crystals of the polyethylene were small. Since the crystals were small, formation of a sink mark between the crystals was suppressed. Therefore, local occurrence of electrical treeing was stably suppressed. It was confirmed that, consequently, the DC breakdown electric field strength measured using the needle electrode B was high in samples 1-2 to 1-8.

(Sample 1-9)

The proportion RX was 10 in sample 1-9.

The DC breakdown electric field strengths respectively measured using the needle electrode A and the needle electrode B were less than 100 kV/mm in sample 1-9.

The proportion RX was more than 5 in sample 1-9, and accordingly, the number of tertiary carbon atoms included in methine groups was large. Therefore, decomposition of the tertiary carbon atoms was likely to occur when a high electric field was locally applied. Also, the number of branches bound to methine groups was large in sample 1-9. Accordingly, the polyethylene included many amorphous portions. Since the polyethylene included many amorphous portions, an electric current was easily transmitted in the amorphous portions. It is thought that, consequently, the DC breakdown electric field strengths respectively measured using the needle electrode A and the needle electrode B were low in sample 1-9.

(Sample 1-1)

The DC breakdown electric field strength measured using the flat electrodes was 250 kV/mm or more in sample 1-1 in which the proportion RX was 0.01. The DC breakdown electric field strength measured using the needle electrode A was 100 kV/mm or more in sample 1-1.

However, the DC breakdown electric field strength measured using the needle electrode B was less than 100 kV/mm in sample 1-1.

The proportion RX was less than 0.05 in sample 1-1. That is, the number of branches bound to methine groups was small, and accordingly, crystals of the polyethylene were large. Therefore, a sink mark was likely to form between the crystals. Electrical treeing started from such a sink mark when a high electric field was applied. It is thought that, consequently, the DC breakdown electric field strength measured using the needle electrode B was low in sample 1-1.

<Experiment 2>

(2-1) Preparation of polyethylene

Polyethylenes contained in resin compositions of samples 2-1 to 2-5 were polymerized using a high pressure method. Ethylene was used as a monomer as in Experiment 1. The polymerization peak temperature and the polymerization pressure are shown in Table 2.

At this time, samples 2-1 to 2-5 were produced by polymerizing the monomer at various polymerization pressures. Thus, the ratio (X/Z) of methine groups to methyl groups in polyethylene was controlled.

Note that sample 2-3 corresponds to sample 1-6 in Experiment 1.

(2-2) Evaluation

The following evaluation was performed on the resin compositions of samples 2-1 to 2-5.

(Evaluation 2 and evaluation 3)

DC breakdown electric field strengths were respectively measured using the needle electrode A and the needle electrode B in the same manner as in experiment 1.

(Evaluation 4: DC breakdown electric field strength measured using needle electrode C)

A DC breakdown electric field strength was measured using a needle electrode C as described below. The radius of curvature of a tip end of the needle electrode C was 3 $\mu$m. Measurement conditions other than the radius of curvature of the tip end of the needle electrode C were the same as the measurement conditions under which the DC breakdown electric field strength was measured using the needle electrode A.

(2-3) Results

Table 2 below shows evaluation results of the resin compositions of samples 2-1 to 2-5 in experiment 2.
[Table 2]

| Sample | | 2-1 | 2-2 | 2-3 | 2-4 | 2-5 |
|---|---|---|---|---|---|---|
| Production conditions of polyethylene | Polymerization peak temperature (degree C) | 260 | 260 | 260 | 260 | 260 |
| | Polymerization pressure (MPa) | 240 | 270 | 300 | 330 | 360 |
| Properties of polyethylene | RX | 0.9 | 1.4 | 1.7 | 1.8 | 2.1 |
| | X/Z | 0.7 | 0.8 | 1 | 1.2 | 1.3 |
| Evaluation | Evaluation 2 (kV/mm) | 115 | 132 | 152 | 144 | 132 |
| | Evaluation 3 (kV/mm) | 101 | 116 | 126 | 122 | 105 |
| | Evaluation 4 (kV/mm) | 65 | 109 | 123 | 121 | 92 |
| Evaluation 2: DC breakdown electric field strength measured using needle electrode A<br>Evaluation 3: DC breakdown electric field strength measured using needle electrode B<br>Evaluation 4: DC breakdown electric field strength measured using needle electrode C | | | | | | |

(Sample 2-1)

The DC breakdown electric field strengths respectively measured using the needle electrode A and the needle electrode B were 100 kV/mm or more in sample 2-1 in which the ratio X/Z was 0.7.
However, the DC breakdown electric field strength measured using the needle electrode C was less than 100 kV/mm in sample 2-1.
In sample 2-1, the ratio X/Z of methine groups to methyl groups was less than 0.8. That is, the content of methine groups was smaller than the content of methyl groups. Accordingly, the polyethylene included portions in which two branches were generated from a quaternary carbon atom, for example. Therefore, decomposition of the quaternary carbon atom was likely to occur when a high electric field was locally applied. It is though that, consequently, the DC breakdown electric field strength measured using the needle electrode C was low in sample 2-1.

(Sample 2-5)

The DC breakdown electric field strengths respectively measured using the needle electrode A and the needle electrode B were 100 kV/mm or more in sample 2-5 in which the ratio X/Z was 1.3.
However, the DC breakdown electric field strength measured using the needle electrode C was less than 100 kV/mm in sample 2-5.
The ratio X/Z was more than 1.2 in sample 2-5. That is, the content of methine groups was larger than the content of methyl groups. Accordingly, many methine groups from which no branch was generated, such as a methine group constituting a vinyl group, were generated, and the number of branches was small. Therefore, a minute sink mark was formed between crystals, and electrical treeing may start from such the minute sink mark when a high electric field was applied. It is though that, consequently, the DC breakdown electric field strength measured using the needle electrode C was low in sample 2-5.

(Samples 2-2 to 2-4)

The DC breakdown electric field strengths respectively measured using the needle electrode A and the needle electrode B were 100 kV/mm or more in samples 2-2 to 2-4 in which the ratio X/Z was 0.8 or more and 1.2 or less.
Furthermore, the DC breakdown electric field strength measured using the needle electrode C was 100 kV/mm or more in samples 2-2 to 2-4.
The ratio X/Z was 0.8 or more in samples 2-2 to 2-4. This suppressed generation of a portion in which two branches are generated from a quaternary carbon atom, for example. Therefore, decomposition that occurs due to the presence of a quaternary carbon atom was suppressed.

In samples 2-2 to 2-4, the ratio X/Z of methine groups to methyl groups was 1.2 or less, and accordingly, excessive generation of methine groups from which no branch was generated was suppressed, and a predetermined number of branches was generated. Therefore, formation of a minute sink mark between crystals was suppressed.

It was confirmed that, consequently, the DC breakdown electric field strength measured using the needle electrode C was high in samples 2-2 to 2-4.

<Experiment 3>

(3-1) Production of power cable sample

Power cable samples were produced as described below.

· Conductor made of copper with a diameter of 14 mm
· Internal semiconductive layer with a thickness of 1 mm
· Insulation layer made of the resin composition of sample 1-2, 1-6, 1-8, 2-2, or 2-4 with a thickness of 3 mm
· External semiconductive layer with a thickness of 1 mm

(3-2) Evaluation

Each of the power cables of samples 1-2, 1-6, 1-8, 2-2, and 2-4 was immersed in silicone oil at a temperature of 90°C, and a direct electric field of 200 kV/mm was applied in the thickness direction of the insulation layer for 1000 hours. At this time, whether or not dielectric breakdown occurred in the insulation layer of each power cable was checked.

(3-3) Results

As a result of the above evaluation, it was confirmed that dielectric breakdown did not occur in the power cables of samples 1-2, 1-6, 1-8, 2-2, and 2-4.

<Comparison of the present disclosure with prior art>

(1) References

As prior art, the following references are disclosed.

Reference 1: EP 2 450 910 A1
Reference 2: EP 3 498 772 A1
Reference 3: EP 3 278 157 A1
Reference 4: US 2020/123354 A1

(2) Comparison with Reference 1

Reference 1 discloses high pressure method as the method for manufacturing polyethylene, and discloses polyethylene having a very wide range of properties.

In contrast, the present disclosure can be considered as a so-called "selection invention", being the selection of individual elements, subsets, or sub-ranges, which have not been explicitly mentioned, within or overlapping with a known set or range in reference 1.

(2-1) Novelty as selection invention compared to Reference 1

(Content of comonomer in Reference 1)

In reference 1, LDPE includes a low-density copolymer containing of ethylene with one or more comonomer(s) (paragraph 0051 in reference 1). Reference 1 describes that the upper limit of content of the comonomer in the LDPE copolymer is "50 wt%" (paragraph 0054 in reference 1).

Here, in LDPE of reference 1, as shown in FIG. 6, assuming that the comonomer is propylene unit, the proportion RX of methine groups is estimated based on the content of the comonomer.

A : the content of ethylene units (mol%)
B : the content of propylene units (mol%)

$$A=100-B$$

In FIG. 6, when the content of propylene units as a comonomer is less than 50 wt%, by converting the unit wt% to mol % based on the molecular weight of each monomer unit, B is calculated as described below.

$$B<\text{about } 40 \text{ mol}\%$$

The proportion RX of methine groups in the above LDPE of reference 1 is obtained by the following equation (A).

$$RX = \frac{B}{2A+3B} \times 100 = \frac{100B}{200+B} = 100\left(1 - \frac{200}{200+B}\right) \quad \cdots (A)$$

When B<40 is substituted into equation (A), RX is calculated as follows in reference 1.

$$RX<16.67$$

Thus, reference 1 describes LDPEs having the proportion RX of methine groups in a much wider range than the range of the present disclosure.

(Manufacturing condition in reference 1)

Reference 1 describes that the polymerization peak temperature is "up to 400°C", which is wider than the range of polymerization peak temperatures (240°C to 270°C) in samples 1-2 to 1-8 of the present disclosure (paragraph 0100 in reference 1).
Reference 1 describes that the polymerization pressure is "700 bar (70 MPa) or more", which is wider than the range of polymerization pressure (270 MPa to 330 MPa) in samples 2-2 to 2-4 of the present disclosure (paragraph 0100 in reference 1).
Thus, reference 1 describes a much wider manufacturing conditions than those used in the Examples of the present disclosure.

(Examples in reference 1)

Among inventive examples in reference 1, the inventive example using manufacturing conditions closest to those of samples 1-2 to 1-8 and 2-2 to 2-4 of the present disclosure is "the inventive example 3". In the inventive example 3 of reference 1, the polymerization pressure is 280 MPa (280 bar) and the polymerization peak temperature is 271°C.
Regarding the inventive example 3 of reference 1, the proportion RX of methine groups is estimated based on the tendency shown in the Examples of the present disclosure.
FIG. 7 shows the polymerization peak temperature dependence of the proportion RX of methine groups when the polymerization pressure is 300 MPa, based on Table 1 of the Examples of the present disclosure.
From the tendency shown in FIG. 7, when the polymerization pressure is 300 MPa and the polymerization peak temperature is 271°C, the proportion RX of methine groups is "5.5" (at the point a in FIG. 7).
Next, as shown in FIG. 8, based on the tendency of RX at the polymerization peak temperature of 260°C in Table 2 of the present disclosure, it is assumed that even when the polymerization peak temperature is 271°C, RX changes linearly with the same slope as that at the polymerization peak temperature of 260°C.
In FIG. 8, the straight line (solid line) of the tendency assumed at the above-mentioned polymerization peak temperature of 271°C, is set to pass through "RX=5.5" obtained above at the polymerization pressure of 300 MPa.
In the straight line of FIG. 8, when the polymerization peak temperature is 271°C and the polymerization pressure is 280 MPa, as the manufacturing conditions of the inventive example 3 of reference 1, the proportion RX of methine groups is estimated to be "5.31" (at the point b in FIG. 8).
Furthermore, in the inventive example 3 of reference 1, "1,7-octadiene" is added during the manufacturing process. Therefore, a lot of vinyl groups containing methine group are incorporated into LDPE (Table 1 of reference 1). From this, in the inventive example 3 of reference 1, the proportion RX of methine groups is even higher than the above estimated "5.31".

In each of the other inventive examples of reference 1, the polymerization peak temperature is higher than that of the inventive example 3. Therefore, the proportion RX of methine groups in each of the other inventive examples of reference 1 is even higher than that of the present disclosure.

From the above, the examples described in reference 1 are not included in the range of the proportion RX (5 or less) of methine groups defined in the present disclosure.

(Summary of 2-1)

As described above, the technical scope described in reference 1 is extremely wide and includes a range in which the effects of the present disclosure cannot be achieved. Furthermore, the specific examples in reference 1 are not included within the technical scope defined by the present disclosure and cannot obtain the effects of the present disclosure.

That is, reference 1 neither discloses nor suggests the range of the proportion RX of methine groups selected to solve new problems discovered by the present inventors. Since there is no disclosure nor suggestion in reference 1, the skilled person in the art would not seriously contemplate the proportion RX of methine groups.

Accordingly, the present disclosure has novelty as selection invention compared to reference 1.

(2-2) Inventive step as selection invention compared to reference 1

Further, the present disclosure involves inventive step as selection invention as follows.

(Novelty of problem)

In Examples of reference 1, tests for loss tan $\delta$ measurements are performed using cables (paragraphs 0169 to 0177 in reference 1).

Reference 1 neither discloses nor suggests tests for measurements that can detect the influence of minute foreign matter in the insulation layer. Tests for measurements of Reference 1 cannot discover new problem of the present disclosure, which is the occurrence of electrical treeing caused due to minute foreign matter.

That is, reference 1 does not recognize the new problem of the present disclosure at all.

(Advantageous and different effect of the present disclosure)

The effect of the invention in reference 1 is that loss tan $\delta$ is reduced in AC (paragraph 0202 in reference 1).

In contrast, the effect by satisfying the proportion RX of methine groups in the present disclosure is that the above new problem can be solved, that is, it is possible to suppress local occurrence of electrical treeing.

This effect of the present disclosure is neither disclosed nor suggested in reference 1 and is advantageous over reference 1. Further, this effect of the present disclosure cannot be confirmed by tests for loss tan $\delta$ measurements, which is measured in the state of the cables. That is, this effect of the present disclosure is different from the effect described in reference 1.

(Unexpected effect)

Since reference 1 does not recognize the new problem of the present disclosure as described above, the effect of the present disclosure cannot be expected by the skilled person in the art based on the state of the art at the time of the present application.

(Summary of 2-2)

From the above, the present disclosure as selection invention is connected to the above technical effect. There is no hint in reference 1 that would lead the skilled person to the present disclosure as selection invention.

Accordingly, the present disclosure involves inventive step as selection invention compared to reference 1.

(3) Comparison with Reference 2

Reference 2 describes the component (B) (modified polyethylene) of the resin composition (paragraph 0035 in reference 2). Reference 2 describes various additives (paragraph 0074).

However, Reference 2 neither discloses nor suggests the proportion RX of methine groups in the present disclosure, and the method for manufacturing polyethylene that satisfies the proportion.

That is, reference 2 neither discloses nor suggest the configuration of the present disclosure. The configuration of reference 2 cannot obtain the effect of the present disclosure.

(4) Comparison with Reference 3

Reference 3 describes a flooding compound including a polymeric filler and a branched olefinic fluid. Reference 3 describes that the branched olefinic fluid has at least 40 methine carbons per one-thousand total carbons (p16l15 to 16 in reference 3).

However, reference 3 describes that the branched olefinic fluid is liquid at 22°C and 1 atmosphere of pressure (p7 l8 to 9 in reference 3). In other words, the branched olefinic fluid is no longer polyethylene.

That is, reference 3 neither discloses nor suggest the configuration of the present disclosure. The configuration of reference 3 cannot obtain the effect of the present disclosure.

(5) Comparison with Reference 4

Reference 4 describes a rubber composition including a rubber matrix containing a branched polyethylene, EPM and EPDM, and essential components containing a crosslinking agent and a reinforcing agent. Reference 4 describes that the degree of branching of the branched polyethylene is preferably 50 to 130 branches/1000 carbon atoms (paragraphs 0016 and 0080 in reference 4).

However, in reference4, only the branched polyethylene whose degree of branching is 50 branches/1000 carbons has a possibility of overlapping with the range of the proportion RX of methine groups (5 or less) of the present disclosure. In other words, other branched polyethylene in reference 4 do not satisfy the proportion RX of methine groups in the present disclosure.

Reference 4 neither discloses nor suggests the method for manufacturing polyethylene that satisfies the proportion RX of methine groups in the present disclosure.

In all examples of reference 4, the degrees of branching are more than 60. Therefore, all examples in reference 4 do not satisfy the proportion RX of methine groups (5 or less) in the present disclosure.

In the first place, reference 4 neither discloses nor suggests the insulation properties of the rubber composition. That is, reference 4 does not recognize the new problem of the present disclosure.

The effect of the invention in reference 4 is that good heat resistance, compression set resistance and mechanical strength are simultaneously obtained (paragraph 0073 in reference 4).

In contrast, the effect of the present disclosure is neither disclosed nor suggested in reference 4 and is advantageous over reference 4. Further, this effect of the present disclosure is clearly different from the effect described in reference 4.

Since reference 4 does not recognize the new problem of the present disclosure as described above, the effect of the present disclosure cannot be expected by the skilled person in the art based on the state of the art at the time of the present application.

Accordingly, the present disclosure has novelty and involves inventive step compared to reference 4.

(6) Conclusion in comparison

Even if references 1 to 4 are combined, the present disclosure can obtain the unexpected effect that are different from that obtained by the combination of these references. The skilled person in the art cannot achieve the present disclosure based on references 1 to 4.

Accordingly, the present disclosure has novelty and involves inventive step compared to references 1 to 4.

[Reference Signs List]

10 Power cable
110 Conductor
120 Internal semiconductive layer
130 Insulation layer
140 External semiconductive layer
150 Shielding layer
160 Sheath
NE Needle electrode

FE1, FE2 Flat electrode
FE3 Electrode
O Silicone oil
S Sheet
S1 First surface
S2 Second surface
a Methine group
b1, b2 Methylene group
c1, c2 Methyl group

**Claims**

1. A resin composition for forming an insulation layer of a power cable, the resin composition comprising:

   polyethylene,
   wherein the polyethylene includes methine groups, and
   the polyethylene satisfies the following formula (1) in a $^{13}$C nuclear magnetic resonance spectrum,

$$RX \leq 5 \quad \cdots \quad (1)$$

   where RX satisfies RX = X/(X+Y+Z)} $\times$ 100, and
   X, Y, and Z respectively represent an integrated intensity of the methine groups, an integrated intensity of methylene groups, and an integrated intensity of methyl groups in the $^{13}$C nuclear magnetic resonance spectrum of the polyethylene, measured as detailed in the description.

2. The resin composition according to claim 1,
   wherein a DC breakdown electric field strength measured using a needle electrode having a tip end with a radius of curvature of 10 $\mu$m is 100 kV/mm or more.

3. The resin composition according to claim 1 or 2,
   wherein the polyethylene satisfies the following formula (2),

$$0.05 \leq RX \quad \cdots \quad (2).$$

4. The resin composition according to claim 3,
   wherein a DC breakdown electric field strength measured using a needle electrode having a tip end with a radius of curvature of 5 $\mu$m is 100 kV/mm or more.

5. The resin composition according to claim 3,
   wherein the polyethylene satisfies the following formula (2)',

$$0.1 \leq RX \quad \cdots \quad (2)'.$$

6. The resin composition according to any one of claim 1 or 2,
   wherein the polyethylene satisfies the following formula (3),

$$0.8 \leq (X/Z) \leq 1.2 \quad \cdots \quad (3).$$

7. The resin composition according to claim 6,
   wherein a DC breakdown electric field strength measured using a needle electrode having a tip end with a radius of curvature of 3 $\mu$m is 100 kV/mm or more.

8. The resin composition according to claim 1 or 2, further comprising an inorganic filler.

9. The resin composition according to claim 1 or 2,
   wherein the polyethylene includes at least low density polyethylene.

10. A pellet comprising the resin composition according to claim 1 or 2.

11. A power cable comprising:

    a conductor; and
    an insulation layer covering an outer circumferential surface of the conductor,
    wherein the insulation layer includes the resin composition according to claim 1 or 2.

12. A method for manufacturing a power cable, comprising:

    preparing a conductor; and
    forming an insulation layer so as to cover an outer circumferential surface of the conductor,
    wherein when forming the insulation layer, the insulation layer is formed using the resin composition according to claim 1 or 2.

**Patentansprüche**

1. Harz-Zusammensetzung zum Ausbilden einer Isolierschicht eines Stromkabels, wobei die Harz-Zusammensetzung umfasst:

   Polyethylen,
   wobei das Polyethylen Methin-Gruppen enthält, und
   für das Polyethylen in einem $^{13}$C-Kernspinresonanz-Spektrum die folgende Formel (1) gilt:

   $$RX \leq 5 \qquad (1),$$

   wobei für RX RX={X/(X+Y+Z)} x 100 gilt, und
   X, Y und Z eine integrierte Intensität der Methin-Gruppen, eine integrierte Intensität von Methylen-Gruppen bzw. eine integrierte Intensität von Methyl-Gruppen in dem $^{13}$C-Kernspinresonanz-Spektrum des Polyethylens, gemessen wie in der Beschreibung im Detail erläutert, repräsentieren.

2. Harz-Zusammensetzung nach Anspruch 1,
   wobei eine Gleichstrom-Durchschlag-Feldstärke, gemessen unter Einsatz einer Nadelelektrode mit einem vorderen Ende, das einen Krümmungsradius von 10 μm hat, 100 kV/mm oder mehr beträgt.

3. Harz-Zusammensetzung nach Anspruch 1 oder 2, wobei für das Polyethylen die folgende Formel (2) gilt:

   $$0,05 \leq RX \qquad (2).$$

4. Harz-Zusammensetzung nach Anspruch 3,
   wobei eine Gleichstrom-Durchschlag-Feldstärke, gemessen unter Einsatz einer Nadelelektrode mit einem vorderen Ende, das einen Krümmungsradius von 5 μm hat, 100 kV/mm oder mehr beträgt.

5. Harz-Zusammensetzung nach Anspruch 3,
   wobei für das Polyethylen die folgende Formel (2)' gilt:

   $$0,1 \leq RX \qquad (2)':$$

6. Harz-Zusammensetzung nach einem der Ansprüche 1 oder 2, wobei für das Polyethylen die folgende Formel (3) gilt:

   $$0,8 \leq (X/Z) \leq 1,2 \qquad (3).$$

**7.** Harz-Zusammensetzung nach Anspruch 6,
wobei eine Gleichstrom-Durchschlag-Feldstärke, gemessen unter Einsatz einer Nadelelektrode mit einem vorderen Ende, das einen Krümmungsradius von 3 $\mu$m hat, 100 kV/mm oder mehr beträgt.

**8.** Harz-Zusammensetzung nach Anspruch 1 oder 2, die des Weiteren einen anorganischen Füllstoff umfasst.

**9.** Harz-Zusammensetzung nach Anspruch 1 oder 2,
wobei das Polyethylen wenigstens Polyethylen niedriger Dichte einschließt.

**10.** Pellet, das die Harz-Zusammensetzung nach Anspruch 1 oder 2 umfasst.

**11.** Stromkabel, das umfasst:

einen Leiter; und
eine Isolierschicht, die eine Außenumfangsfläche des Leiters abdeckt,
wobei die Isolierschicht die Harz-Zusammensetzung nach Anspruch 1 oder 2 enthält.

**12.** Verfahren zum Herstellen eines Stromkabels, das umfasst:

Fertigen eines Leiters; sowie
Ausbilden einer Isolierschicht, so dass sie eine Außenumfangsfläche des Leiters abdeckt,
wobei beim Ausbilden der Isolierschicht, die Isolierschicht unter Verwendung der Harz-Zusammensetzung nach Anspruch 1 oder 2 ausgebildet wird.

**Revendications**

**1.** Composition de résine pour former une couche isolante d'un câble électrique, la composition de résine comprenant :

du polyéthylène,
dans laquelle le polyéthylène inclut des groupes méthine, et
le polyéthylène répond à la formule suivante (1) dans un spectre de résonance magnétique nucléaire du $^{13}$C,

$$RX \leq 5 \ldots (1)$$

où RX répond à la condition RX = {X/(X+Y+Z)}×100, et
X, Y et Z représentent respectivement l'intensité intégrée des groupes méthine, l'intensité intégrée des groupes méthylène et l'intensité intégrée des groupes méthyle dans le spectre de résonance magnétique nucléaire du $^{13}$C pour le polyéthylène, mesurées tel que détaillé dans la description.

**2.** Composition de résine selon la revendication 1,
dans laquelle le champ électrique de claquage CC, mesuré à l'aide d'une électrode à aiguille dont une extrémité de pointe présente un rayon de courbure de 10 $\mu$m, est supérieur ou égal à 100 kV/mm.

**3.** Composition de résine selon la revendication 1 ou 2,
dans laquelle le polyéthylène répond à la formule suivante (2),

$$0,05 \leq RX \ldots (2).$$

**4.** Composition de résine selon la revendication 3,
dans laquelle le champ électrique de claquage CC, mesuré à l'aide d'une électrode à aiguille dont l'extrémité de pointe présente un rayon de courbure de 5 $\mu$m, est supérieur ou égal à 100 kV/mm.

**5.** Composition de résine selon la revendication 3,
dans laquelle le polyéthylène répond à la formule suivante (2)',

$$0,1 \leq RX \ldots (2)'.$$

6. Composition de résine selon l'une quelconque des revendications 1 et 2,
   dans laquelle le polyéthylène répond à la formule suivante (3),

$$0,8 \leq (X/Z) \leq 1,2 \ldots (3).$$

7. Composition de résine selon la revendication 6,
   dans laquelle le champ électrique de claquage CC, mesuré à l'aide d'une électrode à aiguille dont l'extrémité de pointe présente un rayon de courbure de 3 $\mu$m, est supérieur ou égal à 100 kV/mm.

8. Composition de résine selon la revendication 1 ou 2, comprenant en outre une charge inorganique.

9. Composition de résine selon la revendication 1 ou 2,
   dans laquelle le polyéthylène inclut au moins du polyéthylène basse densité.

10. Granulé comprenant la composition de résine selon la revendication 1 ou 2.

11. Câble électrique comprenant :

   un conducteur ; et
   une couche isolante recouvrant une surface circonférentielle externe du conducteur,
   dans lequel la couche isolante inclut la composition de résine selon la revendication 1 ou 2.

12. Procédé de fabrication d'un câble électrique, comprenant :

   la préparation d'un conducteur ; et
   la formation d'une couche isolante de manière à recouvrir une surface circonférentielle externe du conducteur,
   dans lequel, lors de la formation de la couche isolante, la couche isolante est formée en utilisant la composition de résine selon la revendication 1 ou 2.

**FIG. 1**

# FIG. 2

160
150
140
130
120
110

10

# FIG. 3

```
                    ┌──────────────┐
                    │    Start     │
                    └──────────────┘
                           │
                           ▼
   ┌ ─ ─ ─ ─ ─ ─ ─ ─ ─ ─ ─ ─ ─ ─ ─ ─ ─ ─ ─ ─ ┐
   │  ┌─────────────────────────────────┐     │
   │  │ Polyethylene preparation step   │──S120     Resin composition
   │  └─────────────────────────────────┘     │  ─  preparation step
   │                 │                          │     S100
   │                 ▼                          │
   │  ┌─────────────────────────────────┐     │
   │  │          Mixing step            │──S140
   │  └─────────────────────────────────┘     │
   └ ─ ─ ─ ─ ─ ─ ─ ─ ┼ ─ ─ ─ ─ ─ ─ ─ ─ ─ ─ ─ ┘
                     ▼
      ┌─────────────────────────────────┐
      │   Conductor preparation step    │──S200
      └─────────────────────────────────┘
                     │
                     ▼
      ┌─────────────────────────────────┐
      │     Cable core formation step   │──S300
      └─────────────────────────────────┘
                     │
                     ▼
      ┌─────────────────────────────────┐
      │  Shielding layer formation step │──S400
      └─────────────────────────────────┘
                     │
                     ▼
      ┌─────────────────────────────────┐
      │      Sheath formation step      │──S500
      └─────────────────────────────────┘
                     │
                     ▼
              ┌──────────────┐
              │     End      │
              └──────────────┘
```

**FIG. 4**

# FIG. 5A

**FIG. 5B**

**FIG. 6**

FIG. 7

# FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2019202870 A
- JP H11286522 A
- JP 2019189842 A
- US 2021032434 A
- JP 2020132819 A
- US 2020279672 A
- JP 2020132818 A
- US 2020273598 A
- JP 2020132817 A
- US 2020270426 A
- WO 2017026039 A
- US 2018218804 A
- EP 2450910 A1
- EP 3498772 A1
- EP 3278157 A1
- US 2020123354 A1

### Non-patent literature cited in the description

- **MATTIAS G. ANDERSSON**. Highly Insulating Polyethylene Blends for High-Voltage Direct-Current Power Cables. *ACS Macro Letters*, 11 January 2017, vol. 6 (2), 78-82
- **JIANG LIUHAO et al.** The Influence of Short Chain Branch on the Crystal Characteristics and Breakdown Strength of Low-Density Polyethylene. *IEEE Transactions on Dielectrics and Electrical Insulation*, 17 August 2021, vol. 28 (4), 1181-1188